# EUROPÄISCHE PATENTSCHRIFT

(11) **EP 1 892 639 B1**
(45) Veröffentlichungstag und Bekanntmachung des Hinweises auf die Patenterteilung: **28.12.2011**
(21) Anmeldenummer: 07014169.2
(22) Anmeldetag: 19.07.2007
(51) Int. Cl.: G06F 21/00

(54) **Sichere Programmcodeausführung**
Secure program code execution
Exécution sécurisée d'un code de programme

(30) Priorität: 11.08.2006 DE 102006037810
(43) Veröffentlichungstag der Anmeldung: 27.02.2008
(73) Patentinhaber: Giesecke & Devrient GmbH, 81677 München (DE)
(72) Erfinder: Stocker, Thomas, 81739 München (DE); Baldischweiler, Michael, 81825 München (DE)

(56) Entgegenhaltungen:
- EP-A- 0 104 635
- WO-A-2005/024605
- DE-A1- 19 918 620
- US-A1- 2006 156 005
- HAGAI BAR-EL ET AL: "The Sorcerer's Apprentice Guide to Fault Attacks" INTERNET CITATION, [Online] XP002329915 Gefunden im Internet: URL:http://web.archive.org/web/20041016071 838/eprint.iacr.org/2004/100> [gefunden am 2005-05-27]

## Beschreibung

Die vorliegende Erfindung betrifft ein Verfahren zum sicheren Ausführen von Befehlen eines Programmcodes auf einem portablen Datenträger sowie einen derartigen Datenträger.

Mit Rechenkapazität ausgestattete portable Datenträger, wie z. B. Chipkarten, Smart Cards, Mobilfunkkarten, sichere Multimediakarten und dergleichen, sind aufgrund ihrer gespeicherten Daten und ihrer Portabilität häufig durch externe Angriffe in ihrer Integrität gefährdet. Solche Angriffe bezwecken zumeist, Fehler in der Programmabarbeitung eines Prozessors des Datenträgers durch physikalische Einwirkungen von Außen herbeizuführen, um dadurch Zugriff auf die gespeicherten Daten zu erhalten, z. B. mittels DFA-Angriffen (Differentielle Fehleranalyse) oder Lichtangriffen.

Prinzipiell können derartige Angriffe durch einen Vergleich des in einem Speicher des Datenträgers abgespeicherten Programmcodes und der tatsächlich vom Prozessor ausgeführten Befehle detektiert werden, so dass bei Abweichungen zwischen dem abgespeicherten und dem ausgeführten Programmcode die Programmausführung aufgrund eines Angriffs abgebrochen wird. In diesem Zusammenhang offenbart die WO 2006/024903 A1 ein Verfahren, bei dem vor der Ausführung eines Programmcodes eine Referenzprüfsumme aus Befehlsblöcken des auszuführenden Programmcodes errechnet wird und mit entsprechenden Vergleichsprüfwerten verglichen wird, die von denselben Befehlsblöcken während oder unmittelbar vor der Ausführung des Programmcodes errechnet werden. Jedoch bietet das frühzeitige Ermitteln der Referenzprüfwerte vor der Ausführung des Programmcodes aufgrund der Hinterlegung der Referenzprüfwerte auf dem Datenträger weitere Manipulationsmöglichkeiten und keine abschließende Sicherheit. Auch US 2006/0156005 A1 schlägt den Einsatz von vorab für Befehle eines Programmcodes berechneten Referenzprüfsummen vor. DE 19918620 A1 sichert dagegen den Inhalt der Register einer Karte in dem Zeitraum zwischen der Abarbeitung von zwei Befehlen durch eine Prüfsumme ab. EP 1161725 B1 offenbart ein Verfahren zur Überwachung eines Programmablaufs, das Prüfsummen zum Vergleich von abgespeicherten und ausgeführten Befehlen eines Programmcodes statisch ermittelt und insofern keine auf den zu prüfenden Programmcode angepasste Prüfsummenberechnung erlaubt.

Es ist demzufolge die Aufgabe der vorliegenden Erfindung, eine Manipulation eines Programmcodes bei der Ausführung des Programmcodes zuverlässig zu erkennen.

Diese Aufgabe wird erfindungsgemäß durch ein Verfahren sowie einen portablen Datenträger mit den Merkmalen der unabhängigen Ansprüche gelöst. Die davon abhängigen Ansprüche beschreiben vorteilhafte Ausgestaltungen und Weiterbildungen der Erfindung.

Die korrekte Ausführung von Befehlen eines Programmcodes auf einem Prozessor eines portablen Datenträgers wird sichergestellt, indem ein Referenzprüfwert während der Befehlsausführung aus zumindest einem der vor der Ausführung stehenden bzw. ausgeführten Befehle gebildet wird. Nach dem Bilden des Referenzprüfwerts wird bei Eintritt eines vorgegebenen Ereignisses ein Vergleichsprüfwert aus denselben Befehlen des Programmcodes gebildet und mit dem Referenzprüfwert verglichen. Falls der Referenz- und der Vergleichsprüfwert nicht übereinstimmen, wird die weitere Ausführung des Programmcodes abgebrochen, da dies auf eine Manipulation von Befehlen des Programmcodes während ihrer Ausführung hindeutet.

Durch die Erzeugung der Referenzprüfwerte während der Abarbeitung des Programmcodes durch den Prozessor wird der unmittelbar auszuführende bzw. der unmittelbar ausgeführte Befehl exakt auf dem Referenzprüfwert abgebildet und kann mit einem Vergleichsprüfwert verglichen werden, dessen Errechnung von dem Eintritt eines vordefinierten Ereignisses abhängt. Dadurch ist die Vergleichsprüfwertberechnung und insofern die gesamte Überprüfung der Programmausführung selbst von einer bestimmten Situation im Programmablauf abhängig, wodurch eine dynamische, an den Programmcode angepasste Prüfung möglich ist. Bei der vorliegenden Erfindung ist darüber hinaus eine Hinterlegung von statischen, vor der Programmausführung erzeugten Referenzprüfwerten auf dem Datenträger nicht nötig, so dass auch alle damit verbundenen Sicherheitsrisiken vermieden werden können, z.B. die Manipulation abgespeicherter Referenzprüfwerte und dergleichen. Da nur ein aktueller Referenzprüfwert unmittelbar bei Ausführung des entsprechenden Befehls bzw. der Befehle erzeugt und geprüft wird, liegt zwischen der Berechnung eines Referenzprüfwerts und des zugehörigen Vergleichsprüfwerts nur eine kurze Zeitspanne, deren Länge zudem durch eine geeignete Definition des vorgegebenen Ereignisses gesteuert werden kann.

Das erfindungsgemäße Prüfverfahren wird durch eine von den restlichen Software- und Hardwarestrukturen des portablen Datenträgers unabhängige Prüfeinrichtung bereitgestellt, die vorzugsweise als separate Hardwarekomponente des Datenträgers ausgestaltet ist, z. B. in Form eines zusätzlichen Co-Prozessors. Ebenso kann die Prüfeinrichtung auch in eine bereits vorhandene Hardwarekomponente des Datenträgers integriert sein. Dies ermöglicht einerseits eine leichte Absicherung der Prüfeinrichtung vor Angriffen und andererseits eine schnelle Durchführung der Prüfwertberechnung, die den Programmablauf möglichst wenig verzögert.

Bei einer Ausführungsform der vorliegenden Erfindung wird ein Referenzprüfwert jeweils aus einem von dem Prozessor unmittelbar ausgeführten bzw. unmittelbar auszuführenden Befehl des Programmcodes berechnet, wobei bei der Ausführung des nächsten Befehls dieser entweder in den bereits bestehenden Referenzprüfwert integriert wird oder ein neuer Referenzprüfwert aus beiden Befehlen neu berechnet wird. Auf diese Weise werden sukzessive weitere ausgeführte Befehle in dem Referenzprüfwert aufgenommen, deren korrekte Ausführung dann gemeinsam geprüft werden kann.

Dabei wird jeder Befehl, der von der Prüfeinrichtung in die Berechnung des Referenzprüfwerts einbezogen wird, entsprechend markiert, damit die Prüfeinrichtung bei Ausführung des nächsten Befehls feststellen kann, welche bereits abgearbeiteten Befehle zusätzlich in den Referenzprüfwert einzubeziehen sind. Diese Markierung kann z. B. durch Setzen von "Flags" (d.h. Bits) in einem Bit-Feld realisiert werden, dessen Feldeinträge jeweils mit einem Befehl des auszuführenden Programmcodes korrespondieren. Ebenso ist es möglich, ein Zeiger-Feld bzw. ein Byte-Feld anzulegen, das auf die Speicheradressen der jeweils markierten Befehle im Speicher verweist. Bei jeder Errechnung eines neuen Referenzprüfwerts kann die Prüfeinrichtung dann neben dem gerade ausgeführten Befehl alle Befehle in den Referenzprüfwert einbeziehen, denen über das Bit- oder Byte-Feld eine Markierung zugewiesen ist. Dementsprechend werden bei der Berechnung des entsprechenden Vergleichsprüfwerts auch alle markierten Befehle des dann ausgeführten Programmcodes berücksichtigt. Auf diese Weise werden die Referenz- und Vergleichsprüfwerte aus jeweils den gleichen mehreren, bereits ausgeführten Befehlen berechnet und sind dementsprechend vergleichbar. Selbstverständlich kann ein Referenz- und Vergleichsprüfwert jedoch auch aus nur einem ausgeführten Befehl gebildet werden.

Neben der Verwendung von Bit- oder Byte-Feldern, die jedem in Speicher liegenden Befehl einen eigenen Feldeintrag zur Markierung zuordnen, ist es auch möglich, ein Speicherfeld mit einer begrenzten Anzahl von Speicherplätzen zu reservieren, in die die Speicheradressen der zu markierenden Befehle als Zeiger eingetragen werden. Bei der Verwendung einer FIFO-Warteschlange einer vorgegebenen Größe wird dann immer die Speicheradresse des unmittelbar ausgeführten bzw. unmittelbar auszuführenden Befehls in die Warteschlange hineingeschoben und die älteste in der FIFO-Warteschlange befindliche Speicheradresse fällt gleichzeitig aus ihr heraus. Auf diese Weise kann ein Referenz- bzw. Vergleichsprüfwert immer aus all denjenigen zuletzt ausgeführten Befehlen berechnet werden, auf die die in der FIFO-Warteschlange verzeichneten Speicheradressen im Speicher aktuell verweisen.

Bei dieser Variante repräsentiert die Reihenfolge der in der FIFO-Warteschlange eingetragenen Speicheradressen die Ausführungsreihenfolge der zugehörigen Befehle. Es ist deshalb möglich, in die Berechnung der Referenz- und Vergleichsprüfwerte die durch die FIFO-Warteschlange vorgegebene Ausführungsreihenfolge einzubeziehen, so dass auch eine veränderte Ausführungsreihenfolge von ansonsten identischen Befehlen aufgrund eines daraus resultierenden Unterschieds zwischen Referenz- und Vergleichsprüfwerten von der Prüfeinrichtung erkannt werden kann. Alternativ kann neben der Verwendung einer FIFO-Warteschlange die Ausführungsreihenfolge der Befehle auch durch ein Byte-Feld kodiert werden, dessen Feldeinträge jeweils mit einem Befehl des auszuführenden Programmcodes verknüpft sind, indem Ordnungszahlen an den entsprechenden Stellen in dem Byte-Feld eingetragen werden, die die Ausführungsreihenfolge der zugehörigen Befehle wiedergeben.

Die Prüfeinrichtung überwacht auch die Programmausführung durch den Prozessor, um das Eintreten des vorgegebenen Ereignisses zu erkennen, zu dem jeweils ein Vergleichsprüfwert berechnet und mit dem Referenzprüfwert verglichen wird. Dieses Ereignis kann beispielsweise das Erreichen einer vorgegebenen Anzahl von markierten Befehlen sein, also solchen Befehlen, die bereits in den Referenzprüfwert eingeflossen sind. Diese Definition des Ereignisses ermöglicht die Überprüfung der Programmausführung in regelmäßigen und frei definierbaren Schritten. Daneben ist es auch möglich, als Ereignis eine erneute Ausführung eines bereits in dem Referenzprüfwert berücksichtigten Befehls vorzusehen, was beispielsweise bei der Abarbeitung von Programmschleifen auftreten kann. Diese Definition des Ereignisses ermöglicht eine dynamische Berechnung der Referenz- und Vergleichsprüfwerte in Abhängigkeit der Steuerstrukturen des Programms. Ebenso kann als Ereignis auch das Ausführen eines Befehls durch den Prozessor definiert werden, der außerhalb eines bestimmten Bereichs bzw. Fensters eines eingerichteten Bit-/ Byte-Felds bzw. Speicherbereichs liegt.

Nach dem Auftreten und Erkennen eines derartigen vorgegebenen Ereignisses durch die Prüfeinrichtung wird ein Vergleichsprüfwert berechnet und mit dem zugehörigen Referenzprüfwert verglichen. Anschließend werden sämtliche Markierungen in dem Bit-/Byte-Feld gelöscht bzw. eine FIFO-Warteschlange initialisiert, um den nächsten Prüfzyklus einzuleiten.

Bei einer alternativen Ausführungsform der Erfindung umfasst der portable Datenträger in seinem Speicher eine FIFO-Referenzwarteschlange und eine FIFO-Befehlswarteschlange, mit jeweils der gleichen Anzahl an Speicherfeldern. Die Prüfeinrichtung berechnet aus jedem einzelnen von dem Prozessor unmittelbar ausgeführten oder unmittelbar auszuführenden Befehl einen zugehörigen Referenzprüfwert und legt diesen in der FIFO-Referenzwarteschlange ab, während die Speicheradresse desjenigen Befehls, aus dem dieser Referenzprüfwert berechnet wurde, in der FIFO-Befehlswarteschlange abgelegt wird. Bei dieser Ausführungsform ist das Ereignis als das Herausfallen des jeweils ältesten Referenzprüfwerts aus der FIFO-Referenzwarteschlange bzw. der jeweils am längsten in der FIFO-Befehlswarteschlange befindlichen Speicheradresse aus der FIFO-Befehlswarteschlange definiert. Dadurch beginnt die Prüfung des Programmablaufs erst dann, wenn die beiden Warteschlangen gleichzeitig vollständig gefüllt wurden. Die Länge der beiden parallelen Warteschlangen bestimmt den zeitlichen Versatz zwischen der Errechnung eines Referenzprüfwerts aus einem Befehl bzw. der Ausführung dieses Befehls und der Errechnung des entsprechenden Vergleichsprüfwerts des ausgeführten Befehls. Durch die Verwendung von zwei parallelen FIFO-Warteschlangen ist eine kontinuierliche Überprüfung der Programmausführung möglich, da bei jeder Ausführung eines Befehls durch den Prozessor Vergleichsoperationen durch die Prüfeinrichtung stattfinden.

Als eigentliches Verfahren zur Errechnung der Prüfwerte durch die Prüfeinrichtung kommt eine Vielzahl von Prüfsummenverfahren in Frage. Insbesondere ist eine zyklische Redundanzprüfung ("Cyclic Redundancy Check"; CRC) zur Errechnung von Prüfwerten bei denjenigen Ausführungsformen geeignet, die die Ausführungsreihenfolge der geprüften Befehle nicht einbeziehen. Zur Berechnung der Prüfwerte in den Ausführungsformen, die die Ausführungsreihenfolge der Befehle berücksichtigen, kommt z.B. der Reed-Solomon-Algorithmus in Frage.

Während die vorliegende Erfindung insbesondere bei portablen Datenträgern, wie z. B. Chipkarten, Smart Cards, Mobilfunkkarten, sicheren Multimediakarten und dergleichen, einsetzbar ist, kann sie dennoch auch bei jedem beliebigen Computersystem eingesetzt werden, bei dem ein korrekter Programmablauf sichergestellt werden muss.

Weitere Merkmale und Vorteile der Erfindung ergeben sich aus der folgenden Beschreibung verschiedener erfindungsgemäßer Ausführungsbeispiele sowie weiterer Ausführungsalternativen im Zusammenhang mit den begleitenden Zeichnungen. Darin zeigen:
- Fig. 1: einen mit einer erfindungsgemäßen Prüfeinrichtung ausgestatteten portablen Datenträger;
- Fig. 2: eine Ausführung eines Programmcodes durch einen Prozessor gemäß dem Stand der Technik;
- Fig. 3: eine schematische Darstellung einer ersten Ausführungsform der Erfindung unter Verwendung eines Bit-Felds;
- Fig. 4: eine schematische Darstellung einer zweiten Ausführungsform der Erfindung unter Verwendung einer FIFO-Warteschlange;
- Fig. 5: den Verfahrensablauf gemäß der ersten oder zweiten Ausführungsform der Erfindung;
- Fig. 6: eine dritte Ausführungsform der Erfindung unter Verwendung von parallelen FIFO-Befehls- und -Referenzwarteschlangen; und
- Fig. 7: den Verfahrensablauf gemäß der dritten Ausführungsform der Erfindung.

Elektronische Datenträger mit sicherheitskritischen Daten sind häufig Gegenstand von externen Angriffen, mit dem Ziel, deren Integrität zu verletzen und unerlaubt an die Daten des Datenträgers zu gelangen. Dies gilt in besonderer Weise für spezialisierte portable Datenträger, wie z. B. mit einem Prozessor ausgestattete Chipkarten oder Smart Cards, die auf vielfältige Weise persönliche, kommerzielle oder in sonstiger Weise für den Kartenbesitzer wichtige Daten tragen und aufgrund ihrer Portabilität leicht einem Angriff unterzogen werden können. Häufig ist es das Ziel derartiger externer Angriffe, den betreffenden Datenträger mittels physikalischer Einwirkungen von Außen bei der Ausführung von Befehlen eines Programmcodes derart zu stören, dass die daraus resultierenden Fehler bei der Befehlsausführung Möglichkeiten zum Auslesen von Daten bieten. Solche im Chipkartenbereich relevanten Angriffe sind beispielsweise die differentielle Fehleranalyse oder auch Lichtangriffe.

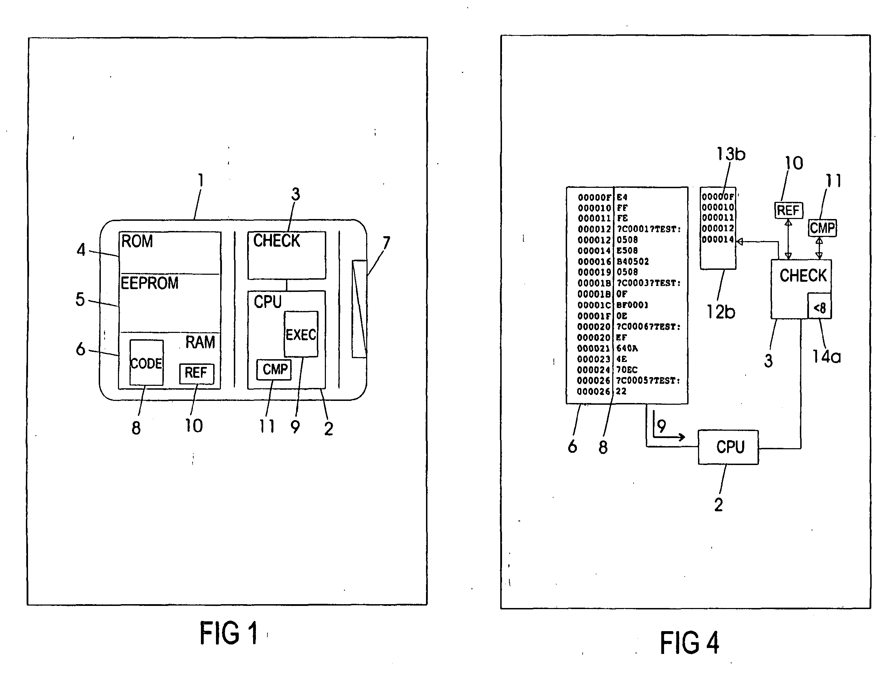

Fig. 1 zeigt einen portablen Datenträger, der erfindungsgemäß ausgestattet und eingerichtet ist, um Angriffe zu erkennen und abzuwehren. Dazu besitzt die Chipkarte 1 den üblichen Chipkartenaufbau mit einem Prozessor 2 (CPU), einer Datenkommunikationsschnittstelle 7 und einer Speicherhierarchie, bestehend aus einem ROM-Permanentspeicher 4, einem wiederbeschreibbaren EEPROM-Speicher 5 und einem flüchtigen RAM-Arbeitsspeicher 6. Als von diesen Komponenten separate Komponente der Chipkarte 1 ist eine Prüfeinrichtung 3 (CHECK) in Form eines Sicherheits-Co-Prozessors eingerichtet, der die Ausführung eines durch den Prozessor 2 auszuführenden Programmcodes 8 (CODE) überwacht, indem sie überprüft, ob der im RAM-Arbeitsspeicher 6 vorliegende Programmcode 8 den von dem Prozessor 2 tatsächlich ausgeführten Befehlen 9 (EXEC) entspricht. Der zu überprüfende Programmcode 8 muss dabei nicht notwendigerweise im RAM-Arbeitsspeicher 6 liegen, sondern kann auch im ROM-Speicher 4, im EEPROM-Speicher 5 oder in einem sonstigen Programmcode-Speicher des Datenträgers 1 zur Ausführung durch den Prozessor 2 bereitliegen.

Dazu errechnet die Prüfeinrichtung 3 aus dem im Arbeitsspeicher 6 vorliegenden Programmcode 8 bzw. aus einzelnen oder Gruppen von auszuführenden Befehlen des Programmcodes 8 bei der Ausführung dieser Befehle 9 durch den Prozessor 2 Referenzprüfwerte 10 (REF), die an einer hierfür vorgesehenen Stelle im RAM-Arbeitsspeicher 6 oder in einem sonstigen Speicher oder Register der Chipkarte 1 abgelegt werden. Ebenso werden Vergleichsprüfwerte 11 (CMP) aus bereits ausgeführten Befehlen des Programmcodes 8 berechnet und mit dem Referenzprüfwert 10 verglichen. Falls die Referenzprüfwerte 10 und die Vergleichsprüfwerte 11 nicht übereinstimmen, wird die Programmausführung von der Prüfeinrichtung 3 abgebrochen, da dies auf einen Angriff auf die Chipkarte 1 hindeutet, der die Befehlsausführung durch den Prozessor 2 stört und einen Unterschied zwischen dem auszuführenden Programmcode 8 und den tatsächlich ausgeführten Befehlen 9 verursacht hat.

Hierbei werden die Referenzprüfwerte 10 des auszuführenden Programmcodes 8 nicht bereits im Vorfeld der Programmausführung ermittelt und im Zusammenhang mit dem Programmcode 8 auf der Chipkarte 1 hinterlegt, sondern die Referenzprüfwerte 10 werden während der Ausführung derjenigen Befehle des Programmcodes 8 durch den Prozessor 2 berechnet, die in einen Referenzprüfwert 10 einfließen sollen, so dass ein Referenzprüfwert 10 anhand der unmittelbar auszuführenden und/ oder unmittelbar ausgeführten Befehle 9 des Programmcodes 8 berechnet wird.

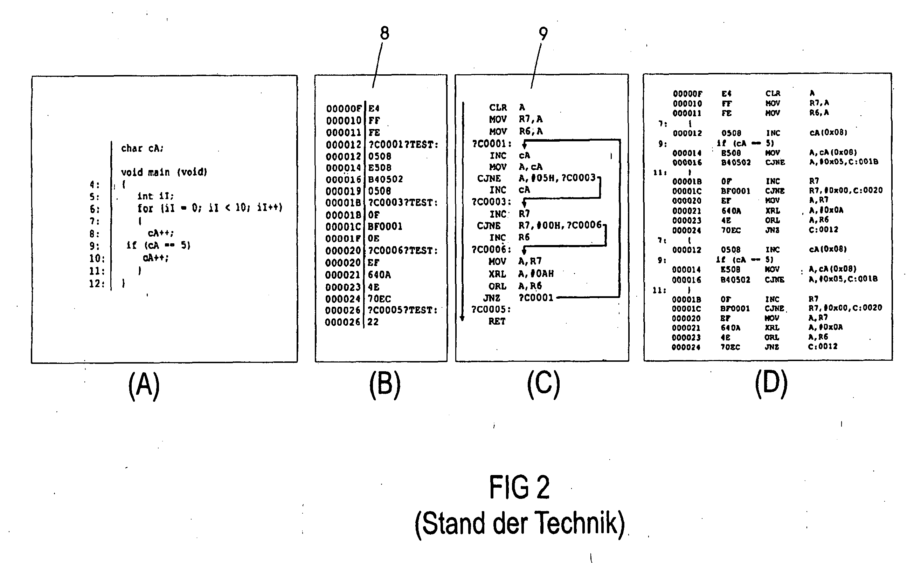

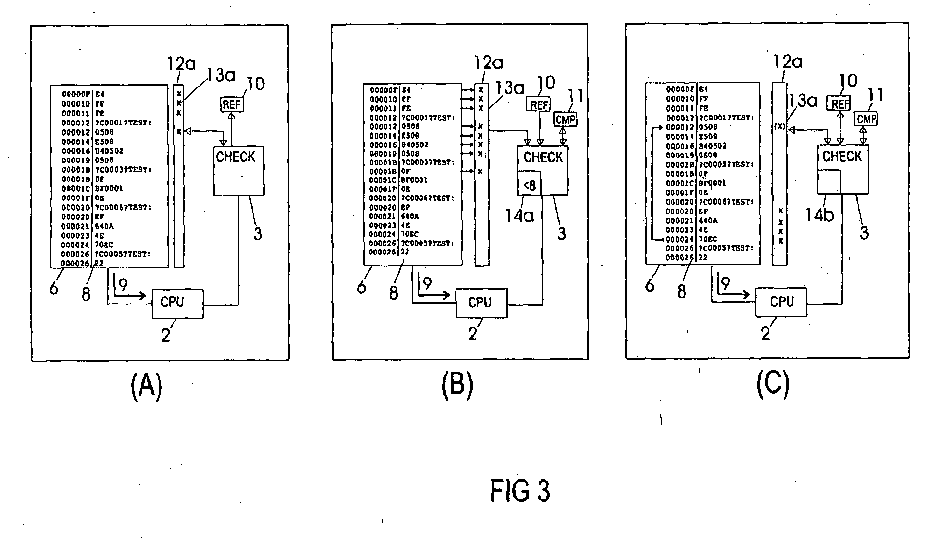

Demgegenüber wird der Vergleichsprüfwert 11 erst bei Eintreten eines bestimmten Ereignisses berechnet, das sich aus dem Programmablauf oder einem beliebigen sonstigen Kriterium oder Zustand der Chipkarte 1 ergeben kann. Nach der Berechnung des Vergleichsprüfwerts 11 wird dieser von der Prüfeinrichtung 3 sofort mit dem Referenzprüfwert 10 verglichen, so dass der Referenzprüfwert 11 lediglich temporär abgespeichert werden muss, vorzugsweise in dem RAM-Arbeitsspeicher 6 oder einem speziellen Register der Prüfeinrichtung 3, während der Vergleichsprüfwert 11 sofort nach seiner Berechnung verwendet wird und deshalb nicht gesondert hinterlegt werden muss. Verschiedene Ausführungsformen dieses grundlegenden Konzepts werden im Zusammenhang mit den Fig. 3 bis 7 erläutert, während Fig. 2 zum besseren Verständnis der Erfindung das Prinzip der Programmausführung durch einen Prozessor 2 gemäß dem Stand der Technik erläutert.

Fig. 2A zeigt ein in der Programmiersprache C geschriebenes Quellcodeprogramm, Fig. 2B zeigt den entsprechenden von einem C-Compiler erzeugten Programmcode 8, Fig. 2C illustriert den Programmablauf bei der Ausführung von Befehlen 9 des Programmcodes 8, während Fig. 2D einen Ausschnitt aus einem möglichen Befehlsablauf 9 bei der Ausführung des des Programmcodes 8 (einem sogenannten Trace-Verlauf) zeigt.

In dem C-Quellcodeprogramm der Fig. 2A wird zunächst eine Variable cA deklariert, die in einem Hauptprogramm (Zeilen 4-12) innerhalb einer FOR-Schleife (Zeilen 6-11) schrittweise inkrementiert wird, die bei jedem Schleifendurchlauf eine IF-Abfrage (Zeilen 9,10) ausführt. Nach der Übersetzung des C-Quellcodeprogramms durch einen geeigneten C-Compiler entsteht der Maschinensprache-Programmcode 8, der zur Ausführung durch den Prozessor 2 in den Arbeitsspeicher 6 des Datenträgers 1 geladen wird, wobei die linke Spalte in Fig. 2B die jeweiligen Hexadezimal-Speicheradressen der Befehle des Programmcodes 8 im Arbeitsspeicher 6 repräsentieren.

In Fig. 2C wird die Reihenfolge der Befehlsabarbeitung 9 des Programmcodes 8 durch Pfeile verdeutlicht. So entspricht beispielsweise der Befehl "INC cA" mit der Speicheradresse 000012 der Inkrementierung der Variablen cA in Zeile 8 des C-Quellcodeprogramms, der Befehl "CJNE" mit der Speicheradresse 000016 prüft die Bedingung der IF-Abfrage in Zeile 9 des C-Quellcodeprogramms und der Befehl "XRL" mit der Speicheradresse 000021 entspricht der Überprüfung der Laufvariablenbedingung "iI < 10" der FOR-Schleife in Zeile 6 des C-Quellcodeprogramms. Der durch den Befehl "JNZ" mit der Speicheradresse 000024 bewirkte Rücksprung zu dem Befehl "INC" der Speicheradresse 000012 entspricht der Durchführung eines weiteren Schleifendurchlaufs der FOR-Schleife, nachdem festgestellt wurde, dass die Laufvariable iI noch nicht den Wert 10 erreicht hat. Ein Ausschnitt aus diesem Programmablauf 9 des Programmcodes 8 ist in Fig. 2D dargestellt, in der die Zeilen 7, 9 und 11 des C-Quellcodes angegeben sind, die jeweils den Beginn einer FOR-Schleife, die IF-Abfrage und das Ende eines FOR-Schleifendurchlaufs repräsentieren. Der Trace-Verlauf in Fig. 2D zeigt den Beginn der Abarbeitung des Programmcodes 8 durch den Prozessor 2, sowie zwei vollständige Durchläufe der FOR-Schleife inklusive der jeweiligen IF-Abfragen.

Bei einem Angriff auf einen Prozessor 2, der den Programmcode 8 der Fig. 2B im Rahmen des Programmablaufs 9 ausführt, würde sich ein Unterschied zwischen dem im RAM-Arbeitsspeicher 6 liegenden Programmcode 8 und den tatsächlich von dem Prozessor 2 ausgeführten Befehlen des Programmablaufs 9 ergeben, der durch Vergleichen von Referenzprüfwerten 10, die während der Befehlsausführung 9 durch den Prozessor 2 gebildet werden, mit Vergleichsprüfwerten 11, die aus den entsprechenden Befehlen des im Speicher 6 vorliegenden Programmcodes 8 gebildet werden, erkannt wird.

Fig. 3 zeigt eine erste bevorzugte Ausführungsform der vorliegenden Erfindung. Der auszuführende Programmcode 8 liegt im RAM-Arbeitsspeicher 6 und wird von dem Prozessor 2 (CPU) als Programmablauf 9 befehlsweise abgearbeitet. In dem Arbeitsspeicher 6 ist außerdem ein Bit-Feld 12a angelegt, das jedem Befehl des Programmcodes 8, d.h. jeder Speicheradresse des Arbeitsspeichers 6, einen Bit-Eintrag zuordnet. In dem Bit-Feld 12a wird jeweils durch eine Bit-Markierung 13a markiert, welche Befehle bereits ausgeführt wurden und in den Referenzprüfwert 10 eingeflossen sind. Nachdem ein Befehl von dem Prozessor 2 ausgeführt wurde, errechnet die Prüfeinheit 3 (CHECK) einen Referenzprüfwert 10 aus denjenigen Befehlen, die in dem Bit-Feld 12a mit einer Markierung 13a versehen sind und dem aktuell ausgeführten Befehl. Dies geschieht vorzugsweise inkrementell, indem der zu diesem Zeitpunkt bestehende Referenzprüfwert 10 lediglich um den soeben ausgeführten Befehl 9 aktualisiert wird, ohne dass der Referenzprüfwert 10 aus allen markierten Befehlen neu berechnet werden muss. Der neue bzw. aktualisierte Referenzprüfwert 10 wird an einer hierfür vorgesehenen Speicherstelle im RAM-Arbeitsspeicher 6 abgespeichert.

Das vorgegebene Ereignis 14a, zu dem ein dem aktuellen Referenzprüfwert 10 entsprechender Vergleichsprüfwert 11 von der Prüfeinheit 3 berechnet wird, ist in der Fig. 3B eine maximale Anzahl von in den Referenzprüfwert 10 (REF) eingegangenen Befehlen, im vorliegenden Fall sind das exemplarisch acht Befehle ("<8"), es kann aber jede beliebige andere zweckmäßige Anzahl vorgegeben werden. Fig. 3B zeigt die Situation, in der die Prüfeinheit 3 das Eintreten des vorgegebenen Ereignisses 14a feststellt, wenn in dem Bit-Feld 12a acht Bit-Markierungen 13a gesetzt sind. Daraufhin wird aus denjenigen Befehlen des Programmcodes 8, die mit einer Bit-Markierung 13a versehen sind, der Vergleichsprüfwert 11 (CMP) berechnet und dieser mit dem aktuell abgespeicherten Referenzprüfwert 10 verglichen. Sofern die Prüfeinheit 3 feststellt, dass diese beiden Prüfwerte 10, 11 nicht übereinstimmen, wird die Programmausführung von der Prüfeinrichtung 3 unterbrochen, indem entsprechende Unterbrechungssignale an ein Betriebssystem des betreffenden Datenträgers oder an den Prozessor 2 übertragen werden. Nach dieser Vergleichsoperation werden sämtliche Markierungen 13a in dem Bit-Feld 12a gelöscht und eine neuer Prüfzyklus eingeleitet, der wiederum nach acht ausgeführten Befehlen mit einem Vergleich der Prüfwerte 10,11 abschließt.

Fig. 3C illustriert eine Ausführungsvariante, bei der das von der Prüfeinrichtung 3 zu erkennende Ereignis 14b ein erneutes Ausführen eines Befehls durch den Prozessor 2 ist, der bereits in den Referenzprüfwert 10 eingegangen ist. Dies kann die Prüfeinrichtung 3 dadurch erkennen, dass sie bei einem aufgrund seiner Ausführung durch den Prozessor 2 zu markierenden Befehl bereits eine Markierung 13a in dem Bit-Feld 12a vorfindet. Auch in diesem Fall wird aus den zu diesem Zeitpunkt mit einer Markierung 13a versehenen Befehlen ein Vergleichsprüfwert 11 berechnet und mit dem aktuellen Referenzprüfwert 10 verglichen. Anschließend werden alle Markierungen 13a gelöscht. Diese Ausführungsvariante ist besonders an den auszuführenden Programmcode 8 angepasst, da bei linearen Programmabläufen unter Umständen sehr viele Befehle in den Referenzprüfwert 10 eingehen, während bei dem Auftreten von Schleifen jeweils genau die einen Schleifendurchlauf bildenden Befehle in den Referenzprüfwert 10 eingehen.

An Speicherplatz benötigt die Ausführungsform der Fig. 3 lediglich das Bit-Feld 12a, das beispielsweise gemeinsam mit dem Programmcode 8 im RAM-Arbeitsspeicher 6 angelegt werden kann. Als Algorithmus zur Berechnung der Prüfwerte 10,11 durch die Prüfeinrichtung 3 kommen prinzipiell alle diejenigen Verfahren in Frage, die einen möglichst eindeutigen Prüfwert aus einer Befehlsfolge - vorzugsweise inkrementell - berechnen, z.B. auch Hashwert-Verfahren, so dass es möglichst unwahrscheinlich ist, dass unterschiedliche Befehlsfolgen zu dem gleichen Prüfwert führen. Da bei der in Fig. 3 illustrierten Ausführungsform die Ausführungsreihenfolge der markierten Befehle aus der Bit-Leiste 12a nicht zu entnehmen ist, kommt hier beispielsweise eine zyklische Redundanzprüfung (CRC) oder dergleichen als Prüfwertberechnungsverfahren in Frage.

Fig. 4 zeigt eine weitere Ausführungsform der Erfindung, bei der anstelle des Bit-Felds 12a eine FIFO-Warteschlange 12b, die auch in dem RAM-Arbeitsspeicher 6 angelegt werden kann, als Datenstruktur zur Markierung von in den Referenzprüfwert 10 eingegangenen Befehlen verwendet wird. Hierbei wird die Speicheradresse jedes Befehls, der von dem Prozessor 2 ausgeführt wurde, in die FIFO-Warteschlange 12b hineingeschoben, so dass die Markierungen 13b in diesem Ausführungsbeispiel Zeiger auf den ausgeführten Befehl im RAM-Arbeitsspeicher 6 repräsentieren. Die Speicheradressen 13b der ausgeführten Befehle können unmittelbar aus dem Programmzähler des Prozessors 2 in die FIFO-Warteschlange 12b hineingeschoben werden.

Auf diese Weise enthält die FIFO-Warteschlange 12b auch eine Information über die Ausführungsreihenfolge der ausgeführten Befehle, die bei der Bildung der Prüfwerte 10,11 durch die Prüfeinrichtung 3 berücksichtigt werden kann. Ein Vergleichsprüfwert 11 kann von der Prüfeinrichtung 3 nach Ausführung einer bestimmten Anzahl von Befehlen durch den Prozessor 2 errechnet werden, wobei diese Maximalzahl der im Rahmen jedes Prüfzyklus auszuführenden Befehle durch die Anzahl der in der FIFO-Warteschlange 12b maximal einzutragenden Markierungen /Speicheradressen 13b vorgegeben ist. In diesem Falle wird ein Vergleichsprüfwert 11 immer dann errechnet, wenn sämtliche in der FIFO-Warteschlange 12b eingetragenen Speicheradressen 13b aufgrund des weiteren Programmablaufs aus der FIFO-Warteschlange herausgefallen sind und durch neue Speicheradressen 13b ersetzt wurden.

Da man bei dieser Ausführungsform aufgrund der Ordnung in der FIFO-Warteschlange 12b eine Information über die Ausführungsreihenfolge der in den Referenzprüfwert 10 eingehenden Befehle erhält, können entsprechende Prüfwertberechnungsverfahren verwendet werden, die diese Ordnungsinformation nutzen und in die Prüfwerte 10, 11 einbringen. Ein solches Verfahren ist beispielsweise das Reed-Solomon-Verfahren, wobei es noch vielfältige andere Prüfwertberechnungsverfahren mit dieser Eigenschaft gibt, die genauso in der vorliegenden Ausführungsform eingesetzt werden können.

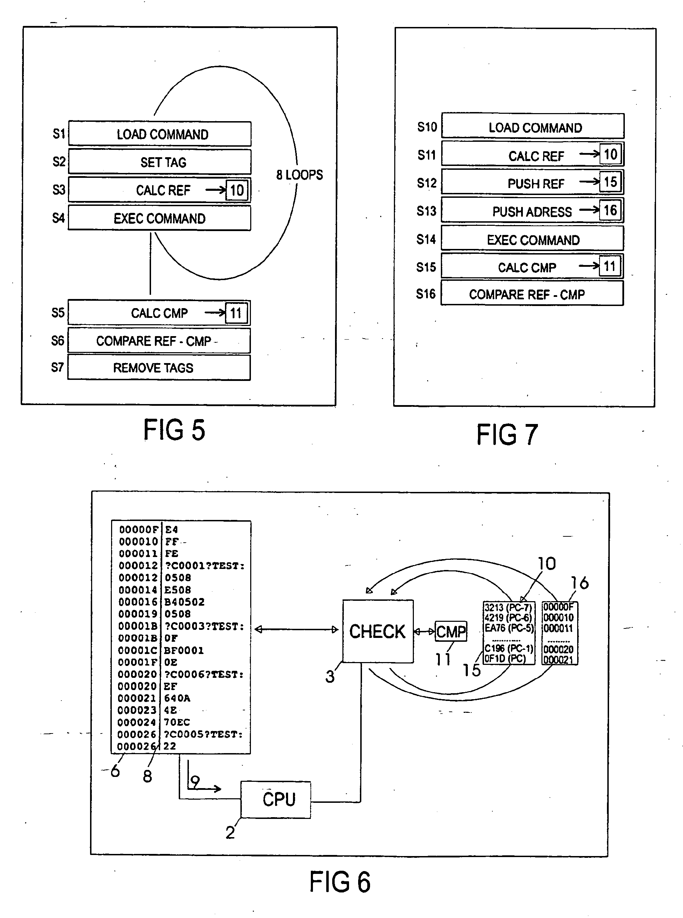

Fig. 5 fasst den Verfahrensablauf der in Fig. 3 und Fig. 4 illustrierten Ausführungsvarianten in Form eines Pseudocodes zusammen. In Schritt S1 wird ein auszuführender Befehl 9 des Programmcodes 8 von dem Prozessor 2 geladen (LOAD COMMAND), woraufhin in Schritt S2 eine entsprechende Markierung 13a, 13b in dem Bit-Feld 12a bzw. in der FIFO-Warteschlange 12b gesetzt wird (SET TAG). Anschließend wird im Schritt S3 der Referenzprüfwert 10 berechnet und gespeichert (CALC REF). In Schritt S4 wird schließlich der auszuführende Befehl 9 von dem Prozessor 2 ausgeführt (EXEC COMMAND). Die Reihenfolge der Schritte S2 bis S4 ist jedoch nur exemplarisch und kann auch anders gewählt werden. Beispielsweise ist es möglich, dass der Referenzprüfwert 10 erst nach der Ausführung des Befehls 9 berechnet wird oder dass die Markierung 13a, 13b erst nach der Berechnung des Referenzprüfwerts 10 und/ oder nach Ausführen des entsprechenden Befehls 9 gesetzt wird.

Die Schritte S1 bis S4 werden je nach Definition des Ereignisses solange in einer Schleife hintereinander ausgeführt, bis der Eintritt des Ereignisses von der Prüfeinrichtung 3 erkannt wird. In Fig. 5 ist das Ereignis 14a als acht nacheinander ausgeführte bzw. in den Referenzprüfwert 10 eingegangene Befehle definiert (8 LOOPS). Sobald dieses Ereignis von der Prüfeinrichtung 3 erkannt wird, wird in Schritt S5 der Vergleichsprüfwert 11 aus den aktuell markierten Befehlen berechnet (CALC CMP) und in Schritt S6 mit dem abgespeicherten Referenzprüfwert 10 verglichen (COMPARE REF-CMP). Anschließend werden in Schritt S7 sämtliche Markierungen 13a, 13b gelöscht (REMVE TAGS), so dass ein neuer Durchgang der Referenz- und Vergleichsprüfwertbildung begonnen werden kann.

Fig. 6 zeigt eine weitere Ausführungsform der vorliegenden Erfindung, bei der eine FIFO-Referenzwarteschlange 15 und eine parallele FIFO-Befehlswarteschlange 16 verwendet wird, die vorzugsweise im RAM-Arbeitsspeicher 6 eingerichtet sind. Die beiden FIFO-Warteschlangen 15,16 haben hierbei vorzugsweise die gleiche Größe, wobei die Feldelemente einander eindeutig zugeordnet sind. Die Referenzwertbildung wird hierbei in die FIFO-Warteschlangen 15,16 integriert, so dass ein zeitlicher Bezug der Prüfwertbildung möglich wird.

Für jeden von dem Prozessor 2 ausgeführten Befehl 9 des im Arbeitsspeicher 6 liegenden Programmcodes 8 wird dessen Speicheradresse im Arbeitsspeicher 6 aus dem Programmzähler des Prozessors 2 in die FIFO-Befehlswarteschlange 16 hineingeschoben. Gleichzeitig wird aus diesem soeben ausgeführten Befehl 9 ein Referenzprüfwert 10 berechnet, der in die FIFO-Referenzwarteschlange 15 hineingeschoben wird. Die FIFO-Referenzwarteschlange 15 umfasst also eine bestimmte Anzahl von Referenzprüfwerten, die jeweils aus demjenigen Befehl gebildet sind, der an der Speicheradresse liegt, die in dem korrespondierenden Feld der FIFO-Befehlswarteschlange 6 eingetragen ist.

Für jeden aufgrund des Nachschiebens eines neuen Referenzprüfwerts in die FIFO-Referenzwarteschlange 15 aus ihr am anderen Ende herausfallenden alten Referenzprüfwert 10 errechnet die Prüfeinrichtung 3 einen entsprechenden Vergleichsprüfwert 11 aus dem parallel aus der FIFO-Befehlswarteschlange 16 aufgrund des Hineinschiebens einer neuen Speicheradresse herausfallenden ältesten Befehls. Insofern wird jeweils der älteste in der FIFO-Referenzwarteschlange 15 vorliegende Referenzprüfwert 10 mit dem aus dem entsprechenden Befehl soeben neu gebildeten Vergleichsprüfwert 11 verglichen. Dies führt dazu, dass, nachdem die beiden FIFO-Warteschlangen 15,16 voll besetzt sind, bei jeder Befehlsausführung durch den Prozessor 2 ein neuer Referenzprüfwert berechnet wird und der jeweils älteste Referenzprüfwert 10 der FIFO-Referenzwarteschlange 15 durch Bilden eines entsprechenden Vergleichsprüfwerts 11 verifiziert wird.

Auf diese Weise ist mit der Ausführungsform der Fig. 6 eine kontinuierliche Überprüfung von Referenzprüfwerten während der Programmausführung durch den Prozessor 2 gewissermaßen "on the fly" möglich. Einer besonderen Markierung der in den Referenzprüfwert 10 eingehenden Befehle bedarf es bei der Ausführungsform der Fig. 6 nicht, da aus jedem einzelnen Befehl ein individueller Referenzprüfwert gebildet wird, der mit einem bestimmten zeitlichen Versatz geprüft wird, der von der Länge der beiden FIFO-Warteschlangen 15,16 abhängt.

Den groben Verfahrensablauf dieser Ausführungsform gibt der Pseudocode der Fig. 7 wieder. Nach dem Laden eines auszuführenden Befehls (LOAD COMMAND) durch den Prozessor 2 in Schritt S10 wird von der Prüfeinheit 3 sofort ein Referenzprüfwert 10 in Schritt S11 berechnet (CALC REF). In den Schritten S12 und S13 wird jeweils in die beiden FIFO-Warteschlangen 15,16 der in Schritt S11 berechnete Referenzprüfwert 10 (PUSH REF) bzw. die Speicheradresse im RAM-Arbeitsspeicher 6 desjenigen Befehls, aus dem der Referenzprüfwert 10 berechnet wurde (PUSH ADRESS), hineingeschoben. In Schritt S14 wird sodann der aktuelle Befehl von dem Prozessor 2 ausgeführt (EXEC COMMAND). In Schritt S15 wird anschließend ein Vergleichsprüfwert 11 zum Verifizieren des ältesten Referenzprüfwerts 10 in der FIFO-Referenzwarteschlange 15, der in Schritt S12 aus dieser Warteschlange herausgefallen ist, aus dem an derjenigen Speicheradresse im Arbeitsspeicher 6 liegenden Befehl berechnet (CALC CMP), die parallel aus der FIFO-Befehlswarteschlange 16 herausgefallen ist. Dieser Vergleichsprüfwert 11 und der aus der FIFO-Referenzwarteschlange 15 herausgefallene Referenzprüfwert 10 werden in Schritt S16 verglichen (COMPARE REF-CMP).

Auch bei diesem groben Verfahrensablauf ist eine strikte Einhaltung der Reihenfolge der Schritte S11 bis S15 nicht notwendig, sondern kann im Rahmen der vorliegenden Erfindung geändert werden. So kann es beispielsweise zweckmäßig sein, den Vergleichsprüfwert 11 noch vor dem Berechnen eines neuen Referenzprüfwerts 10 zu berechnen, damit die aus den beiden Warteschlangen 15,16 herausfallenden Daten nicht zwischengepuffert werden müssen. Ebenso ist es möglich, dass der aktuelle Befehl erst nach sämtlichen Schritten, die die Bildung von Prüfwerten betreffen, ausgeführt wird.

## Patentansprüche

1. Verfahren zum sicheren Ausführen von Befehlen eines Programmcodes (8) auf einem Datenträger (1), umfassend die Schritte des Bildens eines Referenzprüfwerts (10) und eines Vergleichsprüfwerts (11) aus zumindest einem Befehl des Programmcodes (8) und des Vergleichens (S6; S16) des Referenzprüfwerts (10) mit dem Vergleichsprüfwert (11), **dadurch gekennzeichnet, dass** der Referenzprüfwert (10) während einer Ausführung des zumindest einen Befehls gebildet wird (S3; S11), der Vergleichsprüfwert (11) bei Eintreten eines vorgegebenen Ereignisses, nach der Bildung des Referenzprüfwerts (10) gebildet wird (S5; S15) und der Schritt des Bildens (S3; S11) des Referenzprüfwertes für mehrere Befehle ausgeführt wird, bevor der Vergleichsprüfwert (11) gebildet wird.

2. Verfahren nach Anspruch 1, **dadurch gekennzeichnet, dass** in den Referenzprüfwert (10) ein unmittelbar ausgeführter oder unmittelbar auszuführender Befehl (9) und zumindest ein bereits ausgeführter weiterer Befehl eingeht (S3) und jeder in den Referenzprüfwert (10) eingehende Befehl mit einer Markierung (13a, 13b) versehen wird (S2).

3. Verfahren nach Anspruch 2, **dadurch gekennzeichnet, dass** in den Referenzprüfwert (10) alle mit der Markierung (13a, 13b) versehenen Befehle eingehen (S3).

4. Verfahren nach Anspruch 2 oder 3, **dadurch gekennzeichnet, dass** der Vergleichsprüfwert (11) aus den mit der Markierung (13a, 13b) versehenen Befehlen des Programmcodes (8) gebildet wird (S5).

5. Verfahren nach einem der Ansprüche 2 bis 4, **dadurch gekennzeichnet, dass** die Markierungen (13a) in ein Bit- oder Byte-Feld (12a) eingetragen werden (S2), dessen Feldeinträge jeweils einer Speicheradresse eines Befehls zugeordnet sind.

6. Verfahren nach einem der Ansprüche 2 bis 5, **dadurch gekennzeichnet, dass** die Ausführungsreihenfolge der in den Referenzprüfwert (10) eingehenden Befehle in den Referenzprüfwert (10) einbezogen wird (S3) und die in den Referenzprüfwert (10) eingehenden Befehle mit einer deren Ausführungsreihenfolge wiedergebenden Markierung (13b) versehen werden (S2).

7. Verfahren nach Anspruch 6, **dadurch gekennzeichnet, dass** bei der Bildung des Vergleichsprüfwerts (11) die durch die Markierungen (13b) wiedergegebene Ausführungsreihenfolge der in den Referenzprüfwert (10) eingegangenen Befehle in den Vergleichsprüfwert (11) einbezogen wird (S5).

8. Verfahren nach Anspruch 6 oder 7, **dadurch gekennzeichnet, dass** die in den Referenzprüfwert (10) eingegangenen Befehle mit einer deren Ausführungsreihenfolge wiedergebenden Markierungen (13b) versehen werden (S2), indem die Speicheradressen der Befehle in der Ausführungsreihenfolge in einer FIFO-Warteschlange (12b) abgelegt werden.

9. Verfahren nach einem der Ansprüche 2 bis 8, **dadurch gekennzeichnet, dass** das Ereignis ein Erreichen einer vorgegebene Anzahl von in den Referenzprüfwert (10) eingegangenen Befehlen ist (14a) oder ein erneutes Ausführen eines bereits in den Referenzprüfwert (10) eingegangen Befehls ist (14b).

10. Verfahren nach einem der Ansprüche 2 bis 9, **dadurch gekennzeichnet, dass** nach dem Vergleichen (S6) des Referenzprüfwerts (10) mit dem Vergleichsprüfwert (11) alle Markierungen (13a, 13b) gelöscht werden (S7).

11. Verfahren nach Anspruch 1, **dadurch gekennzeichnet, dass** aus jedem unmittelbar ausgeführten oder unmittelbar auszuführenden Befehl (9) ein zugehöriger Referenzprüfwert (10) gebildet wird (S11) und der Referenzprüfwert (10) in einer FIFO-Referenzwarteschlange (15) und die Speicheradresse des Befehls in einer FIFO-Befehlswarteschlange (16) abgelegt wird (S12, S13), die die gleiche Größe wie die FIFO-Referenzwarteschlange (15) hat.

12. Verfahren nach Anspruch 11, **dadurch gekennzeichnet, dass** das Ereignis ein Herausfallen der ältesten in der FIFO-Befehlswarteschlange (16) vorliegenden Speicheradresse aus der FIFO-Befehlswarteschlange (16) ist und dass aus dem Befehl, der an dieser ältesten Speicheradresse vorliegt, ein Vergleichsprüfwert (11) gebildet wird (S15), der mit dem zugehörigen, jeweils ältesten in dem FIFO-Referenzprüfwertspeicher (15) vorliegenden Referenzprüfwert (10) verglichen wird (S16).

13. Verfahren einem der Ansprüche 2 bis 5, 11 oder 12, **dadurch gekennzeichnet, dass** der Referenzprüfwert (10) und der Vergleichsprüfwert (11) durch eine zyklische Redundanzprüfung (CRC) gebildet werden (S3, S5; S11, S15).

14. Verfahren einem der Ansprüche 6 bis 8, **dadurch gekennzeichnet, dass** der Referenzprüfwert (10) und der Vergleichsprüfwert (11) durch das Reed-Solomon-Verfahren gebildet werden (S3, S5; S11, S15).

15. Portabler Datenträger (1), umfassend einen Speicher (6), in dem ein Befehle umfassender Programmcode (8) abgespeichert ist, und einen Prozessor (2) zum Ausführen der Befehle des Programmcodes (8), **dadurch gekennzeichnet, dass** der Datenträger (1) eingerichtet ist zur Ausführung eines Verfahrens nach einem der Ansprüche 1 bis 14.

16. Datenträger (1) nach Anspruch 15, **dadurch gekennzeichnet**, das der Datenträger (1) eine Chipkarte, Smart Card, Mobilfunkkarte oder sichere Multimediakarte ist.

## Claims

1. A method for secure execution of commands of a program code (8) on a data carrier (1), comprising the steps of forming a reference check value (10) and a comparison check value (11) from at least one command of the program code (8) and of comparing (S6; S16) the reference check value (10) with the comparison check value (11), **characterized in that** the reference check value (10) is formed during an execution of the at least one command (S3; S11), the comparison check value (11) is formed upon the occurrence of a specified event, after the forming of the reference check value (10) (S5; S15), and the step of forming (S3; S11) the reference check value is executed for several commands before the comparison check value (11) is formed.

2. The method according to claim 1, **characterized in that** there goes into the reference check value (10) a command (9) that is directly executed or to be directly executed and at least one already executed further command (S3), and each command going into the reference check value (10) is provided with a marking (13a, 13b) (S2).

3. The method according to claim 2, **characterized in that** there go into the reference check value (10) all commands provided with the marking (13a, 13b) (S3).

4. The method according to claim 2 or 3, **characterized in that** the comparison check value (11) is formed from the commands of the program code (8) that are provided with the marking (13a, 13b) (S5).

5. The method according to any of claims 2 to 4, **characterized in that** the markings (13a) are entered in a bit or byte field (12a) whose field entries are respectively associated with a memory address of a command (S2).

6. The method according to any of claims 2 to 5, **characterized in that** the of the commands going into the reference check value (10) is included in the reference check value (10) (S3), and the commands going into the reference check value (10) are provided with a marking (13b) representing their execution order (S2).

7. The method according to claim 6, **characterized in that** upon the forming of the comparison check value (11) the execution order, represented by the markings (13b), of the commands that have gone into the reference check value (10) is included in the comparison check value (11) (S5).

8. The method according to claim 6 or 7, **characterized in that** the commands that have gone into the reference check value (10) are provided with a marking (13b) representing their execution order by the memory addresses of the commands being stored in a FIFO queue (12b) in the execution order (S2).

9. The method according to any of claims 2 to 8, **characterized in that** the event is a reaching of a specified number of commands that have gone into the reference check value (10) (14a), or is a new executing of a command that has already gone into the reference check value (10) (14b).

10. The method according to any of claims 2 to 9, **characterized in that** after the comparing (S6) of the reference check value (10) with the comparison check value (11), all markings (13a, 13b) are erased (S7).

11. The method according to claim 1, **characterized in that** there is formed from each command (9) that is directly executed or to be directly executed an associated reference check value (10) (S11), and the reference check value (10) is stored in a FIFO reference queue (15) and the memory address of the command in a FIFO command queue (16) which has the same size as the FIFO reference queue (15) (S12, S13).

12. The method according to claim 11, **characterized in that** the event is a falling of the oldest memory address present in the FIFO command queue (16) out of the FIFO command queue (16), and that there is formed from the command present at said oldest memory address a comparison check value (11) (S15) which is compared with the associated, respectively oldest reference check value (10) present in the FIFO reference check value memory (15) (S16).

13. The method according to any of claims 2 to 5, 11 or 12, **characterized in that** the reference check value (10) and the comparison check value (11) are formed by a cyclic redundancy check (CRC) (S3, S5; S11, S15).

14. The method according to any of claims 6 to 8, **characterized in that** the reference check value (10) and the comparison check value (11) are formed by the Reed-Solomon method (S3, S5; S11, S15).

15. A portable data carrier (1), comprising a memory (6) in which a program code (8) comprising commands is stored, and a processor (2) for executing the commands of the program code (8), **characterized in that** the data carrier (1) is adapted for executing a method according to any of claims 1 to 14.

16. The data carrier (1) according to claim 15, **characterized in that** the data carrier (1) is a chip card, smart card, mobile radio card or secure MultiMediaCard.

## Revendications

1. Procédé pour une exécution sûre d'instructions d'un code de programme (8) sur un support de données (1), comprenant les étapes de formation d'une valeur de contrôle de préférence (10) et d'une valeur de contrôle comparative (11) à partir d'au moins une instruction du code de programme (8), et de comparaison (S6 ; S16) de la valeur de contrôle de référence (10) avec la valeur de contrôle comparative (11), **caractérisé en ce que** la valeur de contrôle de référence (10) est formée pendant une exécution de la ou des instructions (S3 ; S11), **en ce que** la valeur de contrôle comparative (11) est formée (S5 ; S15) à l'apparition d'un événement prédéfini, après formation de la valeur de contrôle de référence (10), et **en ce que** l'étape de formation (S3 ; S11) de la valeur de contrôle de référence est exécutée pour plusieurs instructions avant que la valeur de contrôle comparative (11) soit formée.

2. Procédé selon la revendication 1, **caractérisé en ce qu'**une instruction (9) immédiatement exécutée ou immédiatement exécutable et au moins une instruction déjà exécutée entrent (S3) dans la valeur de contrôle de référence (10) et **en ce que** chaque instruction entrant dans la valeur de contrôle de référence (10) est pourvue (S2) d'un indicateur (13a, 13b).

3. Procédé selon la revendication 2, **caractérisé en ce que** toutes les instructions pourvues de l'indicateur (13a, 13b) entrent (S3) dans la valeur de contrôle de référence (10).

4. Procédé selon la revendication 2 ou la revendication 3, **caractérisé en ce que** la valeur de contrôle comparative (11) est formée (S5) à partir des instructions du code de programme (8) pourvues de l'indicateur (13a, 13b).

5. Procédé selon l'une des revendications 2 à 4, **caractérisé en ce que** les indicateurs (13a) sont enregistrés (S2) dans un champ de bit ou d'octet (12a) dont les enregistrements de champ sont affectés chacun à une adresse de mémoire d'une instruction.

6. Procédé selon l'une des revendications 2 à 5, **caractérisé en ce que** l'ordre d'exécution des instructions entrant dans la valeur de contrôle de référence (10) est intégré (S3) à la valeur de contrôle de référence (10), et **en ce que** les instructions entrant dans la valeur de contrôle de référence (10) sont pourvues (S2) d'un indicateur (13b) restituant leur ordre d'exécution.

7. Procédé selon la revendication 6, **caractérisé en ce que** lors de la formation de la valeur de contrôle comparative (11), l'ordre d'exécution, restitué par les indicateurs (13b), des instructions entrant dans la valeur de contrôle de référence (10), est intégré (S5) à la valeur de contrôle comparative (11).

8. Procédé selon la revendication 6 ou la revendication 7, **caractérisé en ce que** les instructions entrant dans la valeur de contrôle de référence (10) sont pourvues (S2) d'indicateurs (13b) restituant leur ordre d'exécution, les adresses de mémoire des instructions étant stockées dans une file d'attente FIFO (12b) suivant l'ordre d'exécution.

9. Procédé selon l'une des revendications 2 à 8, **caractérisé en ce que** l'événement est l'arrivée à un nombre défini d'instructions entrant dans la valeur de contrôle de référence (10) (14a) ou une exécution renouvelée d'une instruction déjà entrée dans la valeur de contrôle de référence (10) (14b).

10. Procédé selon l'une des revendications 2 à 9, **caractérisé en ce que** tous les indicateurs (13a, 13b) sont effacés (S7) après comparaison (S6) de la valeur de contrôle de référence (10) avec la valeur de contrôle comparative (11).

11. Procédé selon la revendication 1, **caractérisé en ce qu'**une valeur de contrôle de référence (10) correspondante est formée (S11) à partir de chaque instruction (9) immédiatement exécutée ou immédiatement exécutable, et **en ce que** la valeur de contrôle de référence (10) est stockée (S12, S13) dans une file d'attente de référence FIFO (15) et l'adresse de mémoire de l'instruction dans une file d'attente d'instructions FIFO (16) de même grandeur que la file d'attente de référence FIFO (15).

12. Procédé selon la revendication 11, **caractérisé en ce que** l'événement est une extraction de l'adresse de mémoire la plus ancienne dans la file d'attente d'instructions FIFO (16) hors de la file d'attente d'instructions FIFO (16), et **en ce qu'**une valeur de contrôle comparative (11) est formée (S15) à partir de l'instruction présentée sur cette adresse de mémoire la plus ancienne, laquelle est comparée (S16) avec la valeur de contrôle de référence (10) correspondante, respectivement la plus ancienne dans la mémoire de valeurs de contrôle de référence FIFO (15).

13. Procédé selon l'une des revendications 2 à 5, la revendication 11 ou la revendication 12, **caractérisé en ce que** la valeur de contrôle de référence (10) et la valeur de contrôle comparative (11) sont formées (S3, S5 ; S11, S15) par contrôle cyclique de redondance (CRC).

14. Procédé selon l'une des revendications 6 à 8, **caractérisé en ce que** la valeur de contrôle de référence (10) et la valeur de contrôle comparative (11) sont formées (S3, S5 ; S11, S15) au moyen du procédé Reed-Solomon.

15. Support de données portable (1), comprenant une mémoire (6), où est stocké un code de programme (8) comprenant des instructions, et un processeur (2) pour l'exécution des instructions du code de programme (8), **caractérisé en ce que** ledit support de données (1) est apte à exécuter un procédé selon l'une des revendications 1 à 14.

16. Support de données (1) selon la revendication 15, **caractérisé en ce que** ledit support de données (1) est une carte à puce, une smart card, une carte de téléphone cellulaire ou une carte multimédia sécurisée.
